# EUROPÄISCHE PATENTSCHRIFT

(11) **EP 4 215 399 B1**
(45) Veröffentlichungstag und Bekanntmachung des Hinweises auf die Patenterteilung: **18.06.2025**
(21) Anmeldenummer: 23152762.3
(22) Anmeldetag: 20.01.2023
(51) Int. Cl.: B60K 35/10, B60K 35/21, B60K 35/28, B60K 35/60, B60K 35/81, G06F 3/01

(54) **ANZEIGE- UND BEDIENVORRICHTUNG, KRAFTFAHRZEUG UND VERFAHREN ZUM BETRIEB EINER ANZEIGE- UND BEDIENVORRICHTUNG**
DISPLAY AND OPERATING DEVICE, MOTOR VEHICLE AND METHOD FOR OPERATING A DISPLAY AND OPERATING DEVICE
DISPOSITIF D'AFFICHAGE ET DE COMMANDE, VÉHICULE AUTOMOBILE ET PROCÉDÉ DE FONCTIONNEMENT D'UN DISPOSITIF D'AFFICHAGE ET DE COMMANDE

(30) Priorität: 21.01.2022 DE 102022101457
(43) Veröffentlichungstag der Anmeldung: 26.07.2023
(73) Patentinhaber: AUDI AG, 85057 Ingolstadt (DE)
(72) Erfinder: Müller, Ulrich, 85055 Ingolstadt (DE); Spahmann, Andreas, 74206 Bad Wimpfen (DE)
(74) Vertreter: Hofstetter, Schurack & Partner

(56) Entgegenhaltungen:
- US-A- 5 825 353
- US-A- 5 915 228
- US-A1- 2004 066 405
- US-A1- 2004 076 444
- US-A1- 2020 180 435

## Beschreibung

Die Erfindung betrifft eine Anzeige- und Bedienvorrichtung umfassend eine Anzeige, ein Bedienelement und eine Steuereinrichtung, wobei das Bedienelement hinter der Anzeige angeordnet ist, wobei ein erster Abschnitt des Bedienelements von der Anzeige verdeckt ist und zweiter, manuell bedienbarer Abschnitt des Bedienelements seitlich neben der Anzeige hervorsteht. Weiterhin betrifft die Erfindung ein Kraftfahrzeug sowie ein Verfahren zum Betrieb einer Anzeige- und Bedienvorrichtung.

Zur Aktivierung und Einstellung von verschiedenen Funktionen werden beispielsweise in Kraftfahrzeugen unterschiedliche Arten von Bedieneinrichtungen verwendet. Bekannt ist beispielsweise der Einsatz einer als Dreh-Drück-steller ausgebildeten Bedieneinrichtung, über welche beispielsweise Auswahlen aus einem Menü, welches auf einem der Bedieneinrichtung zugeordneten Display des Kraftfahrzeugs dargestellt wird, getroffen werden können. Eine weitere Methode für die Auswahl und/oder Einstellung von Funktionen, insbesondere in einem Kraftfahrzeug, ist die Verwendung von Touchscreens, welche eine manuelle Bedienung direkt auf der Anzeigefläche und somit unmittelbar an den angezeigten Informationen ermöglichen. Aus dem Stand der Technik sind weitere Anzeige- und/oder Eingabevorrichtungen bekannt.

In DE 10 2010 042 376 A1 wird eine kombinierte Anzeige- und Eingabevorrichtung für ein Fahrzeug beschrieben. Dabei ist eine virtuelle erste Eingabeeinheit vorgesehen, welche als berührungsempfindlicher Bildschirm zur Bedienung mehrerer Funktionen sowie zur Anzeige von Informationen ausgebildet ist. Weiterhin vorgesehen ist eine physische zweite Eingabeeinheit, wobei die Funktionen mittels der ersten Eingabeeinheit und/oder der zweiten Eingabeeinheit anwählbar und auf dem berührungsempfindlichen Bildschirm anzeigbar sind.

DE 10 2019 122 630 A1 offenbart eine Bedienvorrichtung zum Einstellen von Funktionen in einem Kraftfahrzeug. Die Bedienvorrichtung umfasst dazu einen Touchbildschirm zum Anzeigen von Fahrzeugfunktionen sowie zum Erfassen von Berührungen und zum Steuern der Fahrzeugfunktionen. Weiterhin weist die Bedienvorrichtung einen Dreh-Drück-Steller auf, welcher mobil ausgeführt und variabel auf dem Touchscreen positionierbar ist. Über den mit dem Touchbildschirm gekoppelten Dreh-Drück-Steller können dabei ebenfalls Eingaben an der Bedienvorrichtung vorgenommen werden.

Aus DE 10 2008 040 755 A1 ist eine berührungsempfindliche Anzeigevorrichtung mit integriertem mechanischen Bedienelement für Kraftfahrzeuge bekannt. Das Bedienelement wird dabei durch eine mittels eines Haltemagnet erzeugten Magnetkraft auf der Oberfläche einer berührungsempfindlichen Anzeigevorrichtung gehalten. Über Sensorelemente unter der Fläche der Anzeigevorrichtung kann die Schaltstellung des Bedienelements ermittelt werden, so dass das Bedienelement zu Eingaben an der Anzeigevorrichtung verwendbar ist.

Die US 2004/0066405 A1 offenbart ein Eingabegerät mit Display und einem Drehrad, wobei durch Drehen des Drehrads eine Spalte für einen auf dem Display in Zeilen und Spalten angezeigten Zeichensatz vorausgewählt wird.

Die US 2020/0180435 A1 offenbart eine Benutzeroberfläche für ein Fahrzeug mit einem Display und einem anpassbaren Steuergerät, wie beispielsweise einem Drehrad. Durch Betätigen des Steuergeräts kann das Display für Eingaben temporär gesperrt werden, um Fehleingaben zu vermeiden.

Die US 2004/0076444 A1 offenbart ein portables Gerät mit Display und bewegbarem Eingabegerät, beispielsweise einen Drehring, der über das Gehäuse des Geräts zu beiden Seiten hervorsteht. Das Display zeigt zwei Abschnitte, wobei auf einem in einem bogenförmigen Array graphische Objekte dargestellt sind und auf dem anderen der Display Status und Menüinformationen dargestellt sind. Durch Drehen des Drehrings kann ein Nutzer durch das Array graphischer Objekte scrollen, vorzugsweise in dieselbe Richtung, in die der Drehring bewegt wird. Der Drehring wird von einer Scheibe mit Lagerblöcken geführt, der Aussparungen umfasst, die Einrastpositionen für den Drehring bilden.

Der Erfindung liegt die Aufgabe zugrunde, eine verbesserte Anzeige- und Bedienvorrichtung anzugeben, welche insbesondere eine präzise Bedienung wenigstens einer über die Anzeige- und Bedienvorrichtung bedienbaren Funktion ermöglicht.

Zur Lösung dieser Aufgabe ist bei einer Anzeige- und Bedienvorrichtung der eingangs genannten Art erfindungsgemäß vorgesehen, dass die Steuereinrichtung dazu eingerichtet ist, die Anzeige zur Darstellung wenigstens einer Information zumindest teilweise auf dem den ersten Abschnitt des Bedienelements verdeckenden Teilbereich der Anzeige anzusteuern, wobei die Information wenigstens einer über das Bedienelement einstellbaren Funktion zugeordnet ist. Das Bedienelement ist insbesondere ein mechanisches Bedienelement.

Das Bedienelement wird teilweise von der Anzeige überlappt, so dass der erste Abschnitt des Bedienelements bezogen auf eine Betrachtungsrichtung der Anzeige hinter der Anzeige angeordnet ist und somit durch einen Teilbereich der Anzeige verdeckt wird. Der zweite Abschnitt des Bedienelements steht seitlich neben der Anzeige hervor, so dass er manuell bedient werden kann. Bei Betrachten der Anzeige aus der vorgesehenen Blickrichtung kann der zweite Abschnitt daher zu erkennen sein, wohingegen der erste Abschnitt des Bedienelements hinter der Anzeige verdeckt ist.

Die Anzeige- und Bedienvorrichtung ist dazu ausgebildet bzw. eingerichtet, dass über das Bedienelement wenigstens eine Funktion bedient werden kann. Das Darstellen der Information zumindest teilweise auf dem Teilbereich der Anzeige, hinter dem der erste Abschnitt des Bedienelements angeordnet ist, ermöglicht es, den verdeckten, ersten Abschnitt des Bedienelements virtuell mit der dargestellten Information zu erweitern. Vorteilhaft wird auf diese Weise die haptische Bedienbarkeit eines klassischen Eingabeelements, wie beispielsweise eines Drehstellers oder eines Dreh-Drück-Stellers, mit den flexiblen und intuitiven Darstellungsmöglichkeiten eines Touchscreens bzw. eines Displays kombiniert. Es ist also mithin die virtuelle Ergänzung des Bedienelements mit einer der wenigstens einen über das Bedienelement bedienbaren Funktion zugeordneten Information möglich.

Vorteilhaft kann die Information die jeweils aktuell über das Bedienelement bedienbare Funktion beschreiben bzw. eindeutig kenntlich machen, so dass intuitiv und unmittelbar erkennbar ist, welche Funktion bzw. welcher Parameter einer Funktion oder ähnliches über das Bedienelement aktuell einstellbar ist. Die manuelle Bedienung bzw. Einstellung der Funktion erfolgt über das Bedienelement, insbesondere über den seitlich neben der Anzeige hervorstehenden zweiten Abschnitt des Bedienelements, so dass aufgrund der haptischen Rückmeldung des Bedienelements eine präzise Bedienung ermöglicht wird.

Gegenüber der Verwendung eines Touchdisplays hat die erfindungsgemäße Anzeige- und Bedienvorrichtung den weiteren Vorteil, dass durch das manuell bedienbare Bedienelement Einstellungen vorgenommen werden können, ohne dass dazu der Blick zwingend auf die Anzeige gerichtet werden muss, wie dies beispielsweise bei einem Touchscreen mangels haptischer Rückmeldung der Fall sein kann. Insbesondere bei Verwendung der Anzeige- und Bedienvorrichtung in einem Kraftfahrzeug bietet das den Vorteil, dass die Bedienbarkeit der Funktion während der Fahrt erleichtert wird bzw. dass die wenigstens eine Funktion als während der Fahrt als bedienbar ausgeführt werden kann, da keine oder nur eine deutlich kürze Abwendung des Blicks vom Verkehrsgeschehen erforderlich ist.

Weiterhin kann die manuelle Bedienbarkeit des Bedienelements einen hochwertigen Eindruck vermitteln, da aufgrund des durch das manuell bedienbare Bedienelement erzeugten haptischen Feedbacks eine präzise und als angenehm empfundene Bedienung sowie eine präzise Einstellung der Funktion ermöglicht wird.

Durch die Möglichkeit, auf der Anzeige unterschiedliche Informationen darzustellen, kann die Anzeige- und Bedienvorrichtung vorteilhaft für eine Vielzahl von unterschiedlichen Funktionen verwendet werden, wobei aufgrund der Darstellung ein schnelles und intuitives Erfassen der aktuellen Einstellungsmöglichkeit bzw. eines aktuell einstellbaren oder eingestellten Parameters der Funktionen oder ähnliches möglich ist. Aufgrund des räumlichen Zusammenhangs zwischen der Darstellung der Information in dem den ersten Abschnitt des Bedienelements verdeckenden Teilbereich der Anzeige sowie dem sich angrenzend dazu erstreckenden zweiten, manuell bedienbaren Abschnitt des Bedienelements wird eine intuitive und schnell erfassbare Benutzerschnittstelle bereitgestellt.

Erfindungsgemäß kann vorgesehen sein, dass durch die Anzeige der Information in dem den ersten Abschnitt des Bedienelements verdeckenden Teilbereich der Anzeige eine virtuelle Erweiterung des zweiten Abschnitts bzw. eine virtuelle Erweiterung des Bedienelements erreicht werden kann. Vorteilhaft kann so die haptische Bedienbarkeit des Bedienelements mit virtuell dargestellten Informationen auf der Anzeige ergänzt bzw. nach dem Konzept der "Augmented Reality" erweitert werden. Dadurch kann mit Vorteil die Flexibilität der Informationsdarstellung über die Anzeige mit der Funktionsweise des manuell bedienbaren, insbesondere manuell drehbaren, Bedienelements kombiniert werden.

Erfindungsgemäß kann vorgesehen sein, dass durch das Bedienelement wenigstens ein Parameter der Funktion einstellbar ist, wobei ein aktuell eingestellter Wert des Parameters und/oder ein einstellbarer Wertbereich des Parameters, insbesondere als eine Skala, zumindest als ein Teil der Information darstellbar ist. Auf diese Weise kann einfach dargestellt werden, auf welchen Wert der Parameter der einzustellenden Funktion aktuell eingestellt ist bzw. welcher gesamte Wertebereich zur Einstellung des Parameters zur Verfügung steht. Der Wertebereich kann insbesondere als eine Skala dargestellt werden, welche verschiedene Zahlenwerte und/oder Striche, beispielsweise zur Darstellung von Zwischenwerten, umfassen kann.

In einer bevorzugten Ausgestaltung der Erfindung kann vorgesehen, dass zumindest als ein Teil der Information wenigstens eine der Kontur des ersten Abschnitts des Bedienelements entsprechende Grafik anzeigbar ist, wobei die Grafik insbesondere in Abhängigkeit eines aktuell eingestellten Werts des oder eines Parameters der Funktion und/oder einer aktuellen Bewegung des Bedienelements darstellbar ist.

Beispielsweise bei einem als drehbar ausgeführten Bedienelement kann somit die Kontur des ersten Abschnitts auf der Anzeige dargestellt werden, so dass durch die Darstellung der Information in dem Teilbereich der Anzeige eine virtuelle Vervollständigung des zweiten Abschnitts des Bedienelements erfolgt. Vorteilhaft kann somit durch die Darstellung der Information eine virtuelle Ergänzung des Bedienelements bzw. der über das Bedienelement einstellbaren Funktion erfolgen.

Die Grafik kann dabei insbesondere in Abhängigkeit eines aktuell eingestellten Werts des oder eines Parameters der Funktion und/oder einer aktuellen Bewegung, insbesondere einer Drehbewegung, des Bedienelements dargestellt werden. Dies ermöglicht beispielsweise, eine einem Drehsteller entsprechende Grafik anzuzeigen, wobei beispielsweise eine Markierung des Drehstellers mit einer weiterhin als Teil der Information dargestellten Skala einen aktuell eingestellten Wert der Funktion bzw. eines veränderbaren Parameters der Funktion angibt. Bei einer Bedienung des zweiten Abschnitts des Bedienelements kann die Darstellung der Grafik dabei korrespondierend zu einer Bewegung des zweiten Abschnitts dargestellt werden, so dass beispielsweise eine Markierung eines dargestellten Drehstellers entsprechend der manuellen Bedienung des Bedienelements virtuell mitgedreht wird.

Insbesondere ist es möglich, dass bei der manuellen Bedienung des Bedienelements, beispielsweise bei einem Drehen des Bedienelements, die Grafik, welche auf der Anzeige dargestellt wird, zeitsynchron mitbewegt bzw. mitgedreht wird, so dass die Illusion einer mechanischen Verbindung zwischen dem tatsächlich haptisch bedienbaren zweiten Abschnitt des Bedienelements und der virtuellen Grafik als Teil der dargestellten Information erzeugt wird.

Zusätzlich oder alternativ dazu kann auch als Teil der Information der direkt eingestellte Wert beispielsweise als Zahlenwert oder ähnliches, angezeigt werden. Es ist auch möglich, dass die Grafik als eine animierte Grafik dargestellt wird, welche durch eine Drehbewegung des Bedienelements änderbar ist, so dass durch die Grafik auch eine Drehbewegung des Bedienelements, oder eine andere Art der Bedienung des Bedienelements, entsprechend visualisiert werden kann. Beispielsweise ist es möglich, dass als Grafik eine Mechanik abgebildet wird, welche sich bei einer manuellen Bedienung, beispielsweise eine Drehung, des Bedienelements virtuell mitbewegt und dazu kontinuierlich bzw. als Video fortlaufend entsprechend angepasst dargestellt wird.

Erfindungsgemäß kann vorgesehen sein, dass über das Bedienelement mehrere Funktionen einstellbar sind, wobei wenigstens ein Teil der Information in Abhängigkeit der aktuell über das Bedienelement einzustellenden Funktion darstellbar ist, und/oder dass wenigstens ein Teil der Information in Abhängigkeit einer eine die Funktion betreffende Nutzerauswahl beschreibenden Auswahlinformation darstellbar ist.

Vorteilhaft kann somit die zu bedienende Funktion direkt optisch erkannt werden. Die Information kann beispielsweise Piktogramme und/oder Darstellungen umfassen, welche beispielsweise in unterschiedlichen Formen und/oder Farben für unterschiedliche, bedienbare Funktionen dargestellt werden können. Aufgrund der Flexibilität der Darstellung der Information über die Anzeige ist es vorteilhaft möglich, dass die der Funktion bzw. die jeweils den Funktionen zugeordnete Information in Abhängigkeit einer eine Nutzerauswahl beschreibenden Auswahlinformation angepasst werden kann.

Auf diese Weise kann von einem Benutzer, beispielsweise einem Benutzer eines Kraftfahrzeugs, ausgewählt werden, welche Art von Information bzw. Informationsdarstellung für unterschiedliche über das Bedienelement einstellbare Funktionen angezeigt werden sollen. Dies verbessert weiterhin die Bedienbarkeit sowie die intuitive Erfassung der über die Anzeige- und Bedienvorrichtung bedienbaren Funktion, da die Informationsdarstellung an die Wünsche und Vorlieben eines Benutzers angepasst werden kann.

Erfindungsgemäß ist vorgesehen, dass eine haptische Rasterung und/oder ein Anschlag einer Bewegung des Bedienelements in Abhängigkeit der einzustellenden Funktion einstellbar ist. Die einstellbare haptische Rasterung ist durch eine magnetorheologische Einstellbarkeit des Bedienelements umgesetzt, so dass die Rasterung bei einer manuellen Bewegung, beispielsweise einer Drehung, des Bedienelements tatsächlich vorhanden und somit haptisch erfassbar ist. Die Intervalle der Klicks, welche die Rasterung bilden, sind somit von der Steuereinrichtung vorgegeben und werden von dem Bedienelement entsprechend erzeugt. Dies ermöglicht eine softwareseitige Einstellbarkeit der haptischen Rasterung des Bedienelements und somit deren Anpassung an eine über das Bedienelement einzustellende Funktion.

Zusätzlich oder alternativ zu der haptischen Rasterung kann auch ein Anschlag einer Bewegung des Bedienelements mechanisch eingestellt werden. Auch eine mechanische Einstellung eines Anschlags einer Bewegung wie einer Drehung des Bedienelements ist beispielsweise über eine magnetorheologische Einstellbarkeit möglich, so dass ein maximal zur Verfügung stehender Bereich, innerhalb dessen durch eine manuelle Bedienung bzw. Bewegung des Bedienelements Einstellungen vorgenommen werden können, anpassbar ist. Neben einer magnetorheologischen Einstellbarkeit sind auch weitere, unmittelbar das mechanische Verhalten des Bedienelements beeinflussende Einstellbarkeiten möglich. Alternativ zu einer einstellbaren haptischen Rasterung und/oder einstellbaren Anschlägen können auch eine fest vorgegebene Rasterung und/oder fest vorgegebene Anschläge am Bedienelement vorgesehen sein.

In der Erfindung ist vorgesehen, dass zumindest ein Teil der Information in Abhängigkeit der aktuell eingestellten Rasterung und/oder des aktuell eingestellten Anschlags darstellbar ist. Auf diese Weise kann eine Rasterung, beispielsweise die Rasterung einer Drehbewegung des Bedienelements, an die einzustellende Funktion und somit beispielsweise an die jeweils einzustellenden Werte bzw. die für die Einstellung zur Verfügung stehenden Inkremente bzw. Zwischenschritte angepasst werden.

Die eingestellte haptische Rasterung korrespondiert mit der dargestellten Information, so dass beispielsweise die eingestellte haptische Rasterung mit der Skalierung einer als Teil der Information dargestellten Skala oder ähnliches übereinstimmt. Vorteilhaft wird somit weiterhin die Bedienbarkeit der Anzeige- und Bedienvorrichtung verbessert. Auch eine korrespondierende Darstellung des Anschlags, beispielsweise als ein Ende einer als Teil der Information dargestellten Skala, ist entsprechend durch die auf der Anzeige dargestellte Information visualisiert.

Erfindungsgemäß kann vorgesehen sein, dass das Bedienelement scheibenförmig ist und/oder dass das Bedienelement drehbar ist und/oder das Bedienelement kippbar ist und/oder das Bedienelement schiebbar ist und/oder das Bedienelement als Taste eindrückbar ist. Das Bedienelement in der drehbaren Ausgestaltung kann insbesondere um eine Drehachse des Bedienelements drehbar sein, welche zumindest im Wesentlichen senkrecht zu einer Anzeigefläche der Anzeige steht. Bei einem scheibenförmigen Bedienelement sind sowohl der von der Anzeige verdeckte erste Abschnitt des Bedienelements als auch der seitlich neben der Anzeige hervorstehende zweite Abschnitt jeweils scheibensegmentförmig. Als eine an die Kontur des Bedienelements angepasste Grafik kann beispielsweise eine der Scheibensegmentform des ersten Abschnitts entsprechende bzw. eine an die Scheibensegmentform des ersten Abschnitts angepasste Grafik dargestellt werden.

Das Bedienelement in der kippbaren Ausgestaltung kann insbesondere um eine Kippachse des Bedienelements kippbar sein, welche zumindest im Wesentlichen senkrecht zu einer Anzeigefläche der Anzeige steht. Das Bedienelement kann zum Beispiel als Kipp- oder Wippschalter ausgebildet sein. Das Bedienelement in der schiebbaren Ausgestaltung kann insbesondere entlang einer Schiebefläche des Bedienelements verschiebbar sein, welche zumindest im Wesentlichen parallel zu einer Anzeigefläche der Anzeige verläuft. Das Bedienelement kann zum Beispiel als Schiebeschalter ausgebildet sein.

Das Bedienelement in der eindrückbaren Ausgestaltung kann insbesondere entlang einer Drückachse des Bedienelements eindrückbar sein, welche zumindest im Wesentlichen parallel zu einer Anzeigefläche der Anzeige verläuft. Ein schaltbarer Teil des Bedienelements ist somit wie eine Taste beim Betätigen parallel zur Anzeigefläche in Richtung der Anzeige einschiebbar und (bevorzugt automatisch) ausschiebbar oder rückstellbar. Das Bedienelement kann zum Beispiel als Drückschalter oder Taste ausgebildet sein.

In einer bevorzugten Ausgestaltung kann vorgesehen sein, dass das Bedienelement zum Erfassen eines Drückens und/oder eines Verschwenkens und/oder eines Verschiebens des zweiten Abschnitts ausgebildet ist. Beispielsweise kann ein seitliches Drücken auf den zweiten Abschnitt möglich sein, wobei der zweite Abschnitt in Richtung der Anzeige eingedrückt wird. Durch das Drücken kann beispielsweise eine Bestätigung einer ausgewählten Funktion und/oder eines eingestellten Parameters erfolgen. Auch ein Verschwenken des zweiten Abschnitts des Bedienelements, also ein Verkippen des zweiten Abschnitts bzw. des gesamten Bedienelements insbesondere um eine in der Ebene der Anzeige liegende Kippachse, ist möglich. Die Kippachse kann dabei beispielsweise parallel oder orthogonal zu einer Kante der Anzeige, an der der zweite Abschnitt des Bedienelements hervorragt, verlaufen.

Erfindungsgemäß kann vorgesehen sein, dass die Anzeige als ein Touchdisplay ausgeführt ist. Dies ermöglicht es, dass neben der Darstellung der Information auf der Anzeige auch Bedieneingaben an der Anzeige vorgenommen werden können. Die Bedieneingaben können beispielsweise durch einen Druck oder einen Tap auf das Display erfolgen. Das Touchdisplay kann z. B. ein Mittel zur Krafterkennung und/oder ein Mittel zur kapazitiven Messung einer Berührung bzw. einer Berührposition umfassen.

In einer bevorzugten Ausgestaltung der Erfindung kann vorgesehen sein, dass über Eingaben über auf dem Touchdisplay die einzustellende Funktion auswählbar und/oder zumindest teilweise einstellbar ist und/oder dass eine über das Bedienelement vorgenommene Einstellung der Funktion über das Touchdisplay bestätigbar ist. Die Auswahl der Funktion kann beispielsweise durch Darstellung von Informationen außerhalb des verdeckenden Teilbereichs erfolgen. Beispielsweise kann über Piktogramme oder ähnliches eine Anwahl einer anschließend über das Bedienelement zu bedienenden Funktion aus einer Mehrzahl von zur Verfügung stehenden Funktionen erfolgen. Auch eine Einstellung des Parameters oder eines weiteren Parameters der Funktion über das Touchdisplay ist grundsätzlich möglich. Weiterhin können durch das Bedienelement getätigte Eingaben bzw. eingestellte Parameter über das Touchdisplay bestätigt werden.

Für ein erfindungsgemäßes Kraftfahrzeug ist vorgesehen, dass es wenigstens eine erfindungsgemäße Anzeige- und Bedienvorrichtung umfasst.

Erfindungsgemäß kann vorgesehen sein, dass die Anzeige- und Bedienvorrichtung an einer Tür, an einer Armlehne, an einer Mittelkonsole, an einem Lenkrad und/oder an einem Armaturenbrett des Kraftfahrzeugs angeordnet ist. Die Anzeige- und Bedienvorrichtung kann zur Bedienung unterschiedlicher Fahrzeugfunktionen verwendet werden. Zum Beispiel können über die Anzeige- und Bedienvorrichtung Fahrerassistenzsysteme des Kraftfahrzeugs, Komfortsysteme des Kraftfahrzeugs, Multimediasysteme des Kraftfahrzeugs, Fahrbetriebsfunktionen und/oder weitere Funktionen des Kraftfahrzeugs bedient werden.

Beispielsweise ist es möglich, dass über die Anzeige- und Bedienvorrichtung eine Bedienung einer Heizung, einer Klimaanlage oder einer anderen Temperiervorrichtung des Kraftfahrzeugs erfolgen kann. Weitere Beispiele für über die Anzeige- und Bedienvorrichtung bedienbare Kraftfahrzeugfunktionen können z. B. die Einstellung eines Navigationssystems des Kraftfahrzeugs, das Aufrufen oder Verwenden einer Telefonfunktion, die Auswahl von verschiedenen Radiosendern, die Einstellung von Wischintervallen eines Scheibenwischers, die Aktivierung oder Einstellung einer Sitzheizung oder ähnliches sein. Auch andere, vorangehend nicht aufgezählte Fahrzeugfunktionen können über die Anzeige- und Bedienvorrichtung bedient werden.

Für ein erfindungsgemäßes Verfahren zum Betrieb einer Anzeige- und Bedienvorrichtung, welche eine Anzeige, ein Bedienelement und eine Steuereinrichtung umfasst, wobei das Bedienelement hinter der Anzeige angeordnet ist und ein erster Abschnitt des Bedienelements von der Anzeige verdeckt ist, wobei ein zweiter, manuell bedienbarer Abschnitt des Bedienelements seitlich neben der Anzeige hervorsteht, ist vorgesehen, dass die Anzeige durch die Steuereinrichtung zur Darstellung wenigstens einer Information zumindest teilweise auf dem ersten Abschnitt des Bedienelements verdeckenden Teilbereich der Anzeige angesteuert wird, wobei die Information wenigstens einer über das Bedienelement einstellbaren Funktion zugeordnet ist.

Sämtliche vorangehend in Bezug zu der erfindungsgemäßen Anzeige- und Bedienvorrichtung beschriebenen Vorteile und Ausgestaltungen gelten entsprechend für das erfindungsgemäße Kraftfahrzeug und umgekehrt. Auch gelten die für die Anzeige- und Bedienvorrichtung sowie für das Kraftfahrzeug beschriebenen Vorteile und Ausgestaltungen für das erfindungsgemäße Verfahren und umgekehrt.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: ein Ausführungsbeispiel eines erfindungsgemäßen Kraftfahrzeugs,
- Fig. 2: ein Ausführungsbeispiel einer erfindungsgemäßen Anzeige- und Bedienvorrichtung,
- Fig. 3 und 4: Darstellungen unterschiedlicher Informationsdarstellungen auf einer erfindungsgemäßen Anzeige- und Bedienvorrichtung zur Erläuterung eines Ausführungsbeispiels eines erfindungsgemäßen Verfahrens.

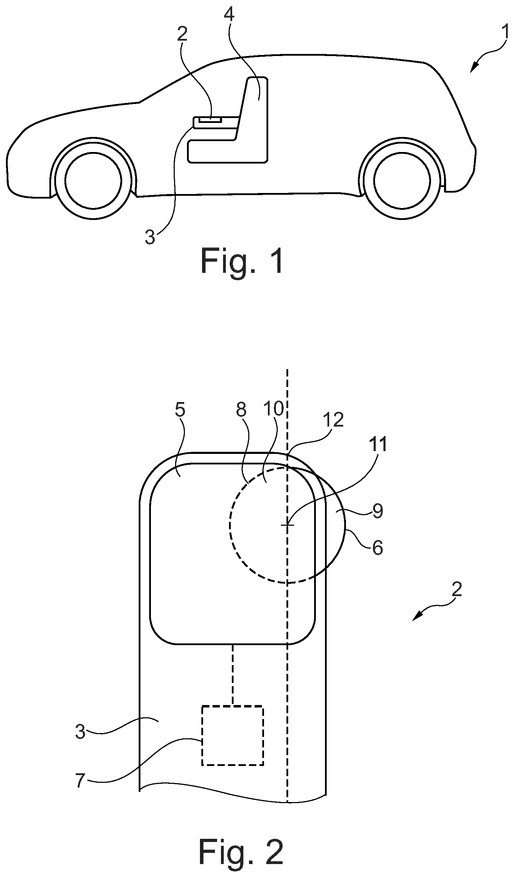

In Fig. 1 ist ein Ausführungsbeispiel eines Kraftfahrzeugs 1 dargestellt. Das Kraftfahrzeug 1 umfasst eine Anzeige- und Bedienvorrichtung 2, welche vorliegend an einer Armlehne 3 eines Fahrzeugsitzes 4 angeordnet ist. Zusätzlich zu der dargestellten Anzeige- und Bedienvorrichtung 2 kann das Kraftfahrzeug 1 weitere Anzeige- und Bedienvorrichtungen 2 umfassen. Diese können beispielsweise an weiteren Armlehnen, an wenigstens einer Tür des Kraftfahrzeugs 1, an einer Mittelkonsole des Kraftfahrzeugs 1, an einem Lenkrad des Kraftfahrzeugs 1 und/oder an einem Armaturenbrett des Kraftfahrzeugs 1 angeordnet sein. Über die Anzeige- und Bedienvorrichtungen 2 können unterschiedliche Fahrzeugfunktionen des Kraftfahrzeugs 1, beispielsweise Fahrerassistenzsysteme des Kraftfahrzeugs 1, Komfortsysteme des Kraftfahrzeugs 1, Multimediasysteme des Kraftfahrzeugs 1, Fahrbetriebsfunktionen und/oder weitere Funktionen des Kraftfahrzeugs 1 bedient werden.

In Fig. 2 ist ein Ausführungsbeispiel der Anzeige- und Bedienvorrichtung 2 dargestellt. Die Anzeige- und Bedienvorrichtung 2 umfasst eine Anzeige 5, ein drehbares Bedienelement 6 sowie eine Steuereinrichtung 7, welche vorliegend schematisch dargestellt ist. Die Steuereinrichtung 7 kann ebenfalls in der Armlehne 3 integriert sein oder an einem anderen Ort innerhalb des Kraftfahrzeugs 1 angeordnet sein, wobei die Steuereinrichtung 7 mit der Anzeige 5 und dem Bedienelement 6 verbunden ist. Ferner kann die Steuereinrichtung 7 mit weiteren Steuergeräten des Kraftfahrzeugs 1, welche zur Umsetzung der über die Anzeige- und Bedienvorrichtung 2 bedienbaren Funktionen ausgebildet bzw. eigerichtet sind, kommunizieren.

Die Anzeige 5 kann als ein Display ausgeführt sein. Es ist auch möglich, dass die Anzeige 5 als ein Touchdisplay ausgeführt ist, so dass zusätzlich Bedieneingaben über die Anzeige 5 erfolgen können. Das Bedienelement 6 ist hinter der Anzeige 5 angeordnet, wobei ein erster Abschnitt 8 des Bedienelements 6 von der Anzeige 5 verdeckt ist. Ein zweiter Abschnitt 9 des Bedienelements 6 steht seitlich neben der Anzeige 5 hervor.

Über den zweiten Abschnitt 9 kann das Bedienelement 6 manuell bedient werden. Die Steuereinrichtung 7 ist dazu eingerichtet, die Anzeige 5 zur Darstellung wenigstens einer Information zumindest teilweise auf einem den ersten Abschnitt 8 des Bedienelements 6 verdeckenden Teilbereich 10 der Anzeige 5 anzusteuern, wobei die Information einer über das Bedienelement 6 einstellbaren Funktion zugeordnet ist.

Das Bedienelement 6 ist scheibenförmig und um eine Drehachse 11, welche zumindest im Wesentlichen senkrecht zu einer Anzeigefläche der Anzeige 5 steht, drehbar. Weiterhin ist das Bedienelement 6 zum Erfassen eines Drückens und/oder eines Verschwenkens des zweiten Abschnitts 9 ausgebildet. Der zweite Abschnitt 9 kann verschwenkbar ausgeführt sein, beispielsweise um eine sich entlang der Armlehne 3 erstreckende Verschwenkachse 12, welche insbesondere parallel zu der Kante der Anzeige 5, an der der zweite Abschnitt 9 hervorsteht, verläuft. Zusätzlich oder alternativ dazu kann über das Bedienelement 6 eine Bedieneingabe durch ein Drücken auf den zweiten Abschnitt 9, insbesondere ein Eindrücken des zweiten Abschnitts 9 in Richtung der Armlehne 3 bzw. der Anzeige 5, erfolgen.

Das Bedienelement 6 kann derart ausgeführt sein, dass eine haptische Rasterung und/oder ein Anschlag einer Drehung des Bedienelements 6 in Abhängigkeit der einzustellenden Funktion eingestellt werden kann. Dabei kann beispielsweise die haptische Rasterung durch eine magnetorheologische Einstellbarkeit des Bedienelements 6 anpassbar sein. Zusätzlich oder alternativ dazu kann ein mechanischer Anschlag des Bedienelements 6, welcher eine Drehung des Bedienelements 6 in wenigstens einer Drehrichtung begrenzt, eingestellt werden. Auch der Anschlag einer Drehbewegung des Bedienelements 6 kann durch eine magnetorheologische Einstellbarkeit des Bedienelements eingestellt werden. Ferner ist auch ein Abschalten des Anschlags möglich, so dass eine anschlagsfreie, unbegrenzte Drehung des Bedienelements 6 in wenigstens einer Drehrichtung um die Drehachse 11 möglich ist.

Der zweite Abschnitt 9 des Bedienelements 6 steht seitlich neben der Anzeige hervor, so dass er manuell bedient werden kann. Der Anteil des scheibenförmigen Bedienelements 6, welcher als zweiter Abschnitt neben der Anzeige 5 hervorsteht, kann dabei vom Einsatzort bzw. dem Ort der Anordnung der Anzeige- und Bedienvorrichtung 2 abhängen. Es ist möglich, dass das Bedienelement 6 zumindest teilweise auch von einer Innenraumverkleidung des Kraftfahrzeugs 1 und/oder einem Überzug der Armlehne 3 abgedeckt bzw. eingefasst wird, wodurch eine verbesserte Integration der Anzeige- und Bedienvorrichtung 2 im Kraftfahrzeug 1 möglich ist.

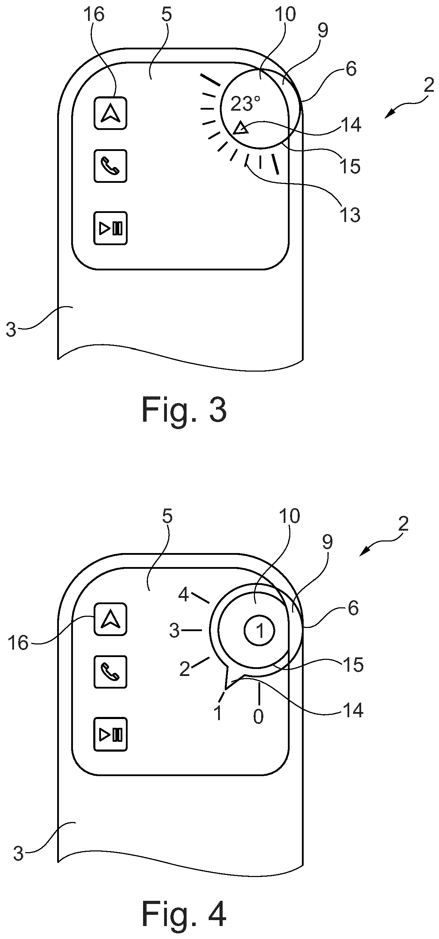

In Fig. 3 ist ein erstes Ausführungsbeispiel einer Informationsdarstellung gezeigt. Hierbei dient die Anzeige- und Bedienvorrichtung 2 beispielsweise zur Einstellung einer Heizung und/oder einer Klimaanlage des Kraftfahrzeugs 1.

In dem Teilbereich 10 wird ein durch das Bedienelement 6 einstellbarer Parameter der Funktion, vorliegend eine Temperatur des Fahrgastraums des Kraftfahrzeugs 1, eingestellt, wobei ein aktuell eingestellter Wert des Parameters als Teil der Information in dem Teilbereich 10 dargestellt wird. Die Darstellung erfolgt dabei als ein Zahlenwert, welcher vorliegend beispielhaft eine Innenraumtemperatur von 23° angibt.

Als ein weiterer Teil der Information wird zusätzlich eine Skala 13 dargestellt, welche die unterschiedlichen Inkremente der Temperatureinstellung visualisiert. Zusätzlich können auch durch die Endpunkte der Skala die jeweils eingestellten Anschläge des Bedienelements 6 dargestellt werden. Insbesondere bei einem Bedienelement 6 mit einstellbarer haptischer Rasterung kann die über das Bedienelement 6 haptisch erfassbare Rasterung den Inkrementen der Skala 13 entsprechen. Die Position des aktuellen Werts des eingestellten Parameters auf der Skala 13 kann zusätzlich als Teil der Information, vorliegend als ein Dreieck 14, dargestellt werden.

Weiterhin wird als ein Teil der Information eine der Kontur des ersten Abschnitts 8 des Bedienelements 6 entsprechende Grafik 15 angezeigt, so dass der erste Abschnitt 8 des Bedienelements 6 virtuell dargstellt bzw. durch die dargestellte Information ergänzt wird. Dabei wird durch die im Teilbereich 10 dargestellte Grafik 15 sowie den sichtbaren, zweiten Abschnitt 9 des Bedienelements 6 ein komplett kreisförmiger Drehsteller gebildet.

Die Verwendung der Anzeige 5 ermöglicht es, die Informationsdarstellung für unterschiedliche, über die Anzeige- und Bedienvorrichtung 2 zu bedienende Funktionen anzupassen. Neben der vorliegend dargestellten Temperatureinstellung einer Heizungs- bzw. Klimaanlage des Kraftfahrzeugs 1 kann auch eine Vielzahl von anderen Funktionen über die Bedienvorrichtung 2 bedient werden, wobei entsprechend die dargestellte Information in Abhängigkeit der über das Bedienelement 6 einstellbaren Funktion angezeigt werden kann.

Dabei ist es insbesondere möglich, dass über das Bedienelement mehrere Funktionen einstellbar sind, wobei wenigstens ein Teil der Information in Abhängigkeit der aktuell über das Bedienelement 6 einzustellenden Funktion darstellbar ist. Zusätzlich oder alternativ dazu ist auch die Darstellung der Information in Abhängigkeit einer eine Nutzerauswahl bezüglich der einzustellenden Funktion beschreibenden Auswahlinformation möglich. Dies ermöglicht es, die Informationsdarstellung an die jeweils einzustellende Funktion anzupassen und dabei gegebenenfalls eine Nutzerauswahl zu berücksichtigen, so dass die Informationsdarstellung im Teilbereich 10 nach den Vorlieben eines Benutzers des Kraftfahrzeugs 1 erfolgen kann.

Eine über die Anzeige- und Bedienvorrichtung 2 einstellbare Funktion kann beispielsweise über die Anzeige 5 ausgewählt werden, wenn diese als ein Touchdisplay ausgebildet ist. Dazu sind schematisch mehrere Piktogramme 16 dargestellt, welche außerhalb des Teilbereichs 10 dargestellt werden und über welche verschiedene Funktionen, beispielsweise eine Navigationsfunktion, eine Telefonfunktion oder eine Musikfunktion, ausgewählt werden können. Auch eine Bestätigung einer über das Bedienelement vorgenommenen Auswahl und/oder Einstellung kann zum Beispiel über eine Bedieneingabe an der als Touchdisplay ausgebildeten Anzeige 5 erfolgen. Die Bedieneingaben können beispielsweise durch einen Druck oder einen Tap auf die Anzeige 5 erfolgen. Die als Touchdisplay ausgebildete Anzeige 5 kann dazu z. B. ein Mittel zur Krafterkennung und/oder ein Mittel zur kapazitiven Messung einer Berührung bzw. einer Berührposition umfassen.

In Fig. 4 ist ein weiteres Ausführungsbeispiel einer Informationsdarstellung über die Anzeige- und Bedienvorrichtung 2 dargestellt. In diesem Ausführungsbeispiel wird ebenfalls eine Skala 13 dargestellt, welche sich jedoch hinsichtlich der Inkrementierung von der in Fig. 3 dargestellten Skala 13 unterscheidet. Beispielsweise kann über die Anzeige- und Bedienvorrichtung 2 eines von insgesamt fünf möglichen Intervallen eines Scheibenwischerbetriebs eingestellt werden. Die Darstellung der Information auf der Anzeige 5 erfolgt dabei insbesondere in Abhängigkeit einer aktuell eingestellten Rasterung und/oder des aktuell eingestellten Anschlags des Bedienelements 6, so dass die haptisch erfassbaren Inkremente bei der manuellen Bedienung des Bedienelements 6 mit der Inkrementierung der Skala 13 übereinstimmen.

Die Darstellung im Teilbereich 10 kann dabei für die Einstellung des Scheibenwischerbetriebs in einer anderen Art erfolgen, so dass bereits bei Blick auf den virtuell ergänzten Teil des Bedienelements 6 die einzustellende Funktion und/oder ein aktueller Wert eines veränderbaren Parameters der Funktion erkannt werden kann. Vorliegend wird als Teil der Information bzw. als veränderbarer Parameter eine eingestelltes, erstes Intervall des Scheibenwischerbetriebs als Zahlenwert dargestellt.

Die Darstellung des Zahlenwerts erfolgt dabei in anderer Weise als bei der vorangehend beschriebenen Einstellung der Innenraumtemperatur. Ferner wird auch eine andersartige Grafik 15 dargestellt, so dass unmittelbar anhand der dargestellten Information die einzustellende Funktion erkannt werden kann. Die vorliegenden Darstellungen der Information sind rein schematisch und können insbesondere auch in anderer Weise erfolgen.

Es ist möglich, dass die Darstellung der Information in Abhängigkeit einer aktuellen Drehbewegung des Bedienelements 6 erfolgt, so dass beispielsweise die Markierung 14 entsprechend bei einer Drehbewegung des Bedienelements 6 insbesondere zeitsynchron mitbewegt wird. Dies verstärkt den Eindruck, dass der virtuell dargestellte Teil des Bedienelements 6 im Teilbereich 10 mit dem physisch ertastbaren zweiten Abschnitt 9 des Bedienelements 6 verbunden ist. Die Informationsdarstellung kann in vielerlei Varianten erfolgen und beispielsweise auch komplexere Grafiken, z. B. die Darstellung einer kompletten, bei manueller Bewegung des Bedienelements 6 bewegbaren Mechanik auf der Anzeige 5 und/oder weiterer Bild- und/oder Videoelemente umfassen.

In einem Verfahren zum Betrieb der Anzeige- und Bedienvorrichtung 2 wird die Anzeige 5 durch die Steuereinrichtung 7 zur Darstellung der Information zumindest teilweise auf dem ersten Abschnitt 8 des Bedienelements 6 verdeckenden Teilbereich 10 der Anzeige 5 angesteuert wird, wobei die Information wenigstens einer über das Bedienelement 6 einstellbaren Funktion zugeordnet ist. Die Informationsdarstellung erfolgt dabei insbesondere so wie es vorangehend beschrieben wurde.

Neben der dargestellten Anordnung des Bedienelements 6 im Bereich einer bezogen auf die Armlehne 3 vorderen, rechten Ecke der Anzeige 5 sind auch andere Orte der Anordnung des Bedienelements 6 möglich. Ferner kann auch das Verhältnis zwischen dem verdeckten ersten Abschnitt 8 und dem freistehenden zweiten Abschnitt 9 des Bedienelements 6 unterschiedlich ausgeführt werden. Das Kraftfahrzeug 1 kann insbesondere mehrere Anzeige- und Bedienvorrichtungen 2 aufweisen, welche an unterschiedlichen Orten im Kraftfahrzeug angeordnet und/oder unterschiedlichen Funktionen zugeordnet sein können. Alternativ zu einer einstellbaren haptischen Rasterung und/oder einstellbaren Anschlägen können auch eine fest vorgegebene Rasterung und/oder fest vorgegebene Anschläge am Bedienelement 6 vorgesehen sein. Auch eine Ausführung des Bedienelements 6 ohne Rasterung und/oder ohne Anschläge ist möglich.

## Patentansprüche

1. Anzeige- und Bedienvorrichtung umfassend eine Anzeige (5), ein Bedienelement (6) und eine Steuereinrichtung (7), wobei das Bedienelement (6) hinter der Anzeige (5) angeordnet ist, wobei ein erster Abschnitt (8) des Bedienelements (6) von der Anzeige (5) verdeckt ist und ein zweiter, manuell bedienbarer Abschnitt (9) des Bedienelements (6) seitlich neben der Anzeige (5) hervorsteht, wobei die Steuereinrichtung (7) dazu eingerichtet ist, die Anzeige (5) zur Darstellung wenigstens einer Information zumindest teilweise auf dem den ersten Abschnitt des Bedienelements (6) verdeckenden Teilbereich (10) der Anzeige (5) anzusteuern, wobei die Information wenigstens einer über das Bedienelement (6) einstellbaren Funktion zugeordnet ist
**dadurch gekennzeichnet, dass**
eine haptische Rasterung und/oder ein Anschlag einer Bewegung des Bedienelements (6) in Abhängigkeit der einzustellenden Funktion einstellbar ist, wobei die Einstellbarkeit des Bedienelements magnetorheologisch umgesetzt ist und die Intervalle der Klicks, welche die Rasterung bilden, von der Steuereinrichtung vorgegeben und von dem Bedienelement entsprechend erzeugt werden, wobei zumindest ein Teil der Information in Abhängigkeit der aktuell eingestellten Rasterung und/oder des aktuell eingestellten Anschlags darstellbar ist, wobei die eingestellte haptische Rasterung und/oder der aktuell eingestellte Anschlag mit der dargestellten Information korrespondiert.

2. Anzeige- und Bedienvorrichtung nach Anspruch 1,
**dadurch gekennzeichnet,**
**dass** die Anzeige (5) ausgebildet ist, den verdeckten, ersten Abschnitt (8) des Bedienelements (6) virtuell mit der wenigstens einen Information zu erweitern.

3. Anzeige- und Bedienvorrichtung nach einem der vorhergehenden Ansprüche,
**dadurch gekennzeichnet,**
**dass** durch das Bedienelement (6) wenigstens ein Parameter der Funktion einstellbar ist, wobei ein aktuell eingestellter Wert des Parameters und/oder ein einstellbarer Wertebereich des Parameters, insbesondere als eine Skala, zumindest als ein Teil der Information darstellbar ist.

4. Anzeige- und Bedienvorrichtung nach einem der vorhergehenden Ansprüche,
**dadurch gekennzeichnet,**
**dass** zumindest als ein Teil der Information wenigstens eine der Kontur des ersten Abschnitts (8) des Bedienelements (6) entsprechende Grafik (15) angezeigt wird, wobei die Grafik (15) insbesondere in Abhängigkeit eines aktuell eingestellten Werts des oder eines Parameters der Funktion und/oder einer aktuellen Bewegung des Bedienelements (6) darstellbar ist.

5. Anzeige- und Bedienvorrichtung nach einem der vorangehenden Ansprüche,
**dadurch gekennzeichnet,**
**dass** über das Bedienelement (6) mehrere Funktionen einstellbar sind, wobei wenigstens ein Teil der Information in Abhängigkeit der aktuell über das Bedienelement (6) einzustellenden Funktion darstellbar ist, und/oder dass wenigstens ein Teil der Information in Abhängigkeit einer eine die Funktion betreffende Nutzerauswahl beschreibenden Auswahlinformation darstellbar ist.

6. Anzeige- und Bedienvorrichtung nach einem der vorangehenden Ansprüche,
**dadurch gekennzeichnet,**
**dass** das Bedienelement (6) scheibenförmig ist und/oder dass das Bedienelement (6) drehbar ist und/oder das Bedienelement (6) kippbar ist und/oder das Bedienelement (6) schiebbar ist und/oder das Bedienelement (6) als Taste eindrückbar ist.

7. Anzeige- und Bedienvorrichtung nach einem der vorangehenden Ansprüche,
**dadurch gekennzeichnet,**
**dass** das Bedienelement (6) zum Erfassen eines Drückens und/oder eines Verschwenkens des zweiten Abschnitts (9) und/oder eines Verschiebens des zweiten Abschnitts (9) ausgebildet ist.

8. Anzeige- und Bedienvorrichtung nach einem der vorangehenden Ansprüche,
**dadurch gekennzeichnet,**
**dass** die Anzeige (5) als ein Touchdisplay ausgeführt ist.

9. Anzeige- und Bedienvorrichtung nach Anspruch 8,
**dadurch gekennzeichnet,**
**dass** über Eingaben auf dem Touchdisplay die einzustellende Funktion auswählbar und/oder zumindest teilweise einstellbar ist und/oder dass eine durch das Bedienelement (6) vorgenommene Einstellung der Funktion über das Touchdisplay bestätigbar ist.

10. Kraftfahrzeug umfassend wenigstens eine Anzeige- und Bedienvorrichtung nach einem der vorangehenden Ansprüche.

11. Kraftfahrzeug nach Anspruch 10,
**dadurch gekennzeichnet,**
**dass** die Anzeige- und Bedienvorrichtung an einer Tür, an einer Armlehne (3), an einer Mittelkonsole, an einem Lenkrad und/oder an einem Armaturenbrett des Kraftfahrzeugs (1) angeordnet ist.

12. Verfahren zum Betrieb einer Anzeige- und Bedienvorrichtung (2) zur Informationsdarstellung, umfassend eine Anzeige (5), ein Bedienelement (6) und eine Steuereinrichtung (7), wobei das Bedienelement (6) hinter der Anzeige (5) angeordnet ist und ein erster Abschnitt (8) des Bedienelements (6) von der Anzeige (5) verdeckt ist, wobei ein zweiter, manuell bedienbarer Abschnitt (9) des Bedienelements (6) seitlich neben der Anzeige (5) hervorsteht, wobei die Anzeige (5) durch die Steuereinrichtung (7) zur Darstellung wenigstens einer Information zumindest teilweise auf dem den ersten Abschnitt (8) des Bedienelements (6) verdeckenden Teilbereich (10) der Anzeige (5) angesteuert wird, wobei die Information wenigstens einer über das Bedienelement (6) einstellbaren Funktion zugeordnet ist,
**dadurch gekennzeichnet, dass**
eine haptische Rasterung und/oder ein Anschlag einer Bewegung des Bedienelements (6) in Abhängigkeit der einzustellenden Funktion eingestellt wird, wobei die Einstellbarkeit des Bedienelements magnetorheologisch umgesetzt wird, und die Intervalle der Klicks, welche die Rasterung bilden, von der Steuereinrichtung vorgegeben werden und von dem Bedienelement entsprechend erzeugt werden, und wobei zumindest ein Teil der Information in Abhängigkeit der aktuell eingestellten Rasterung und/oder des aktuell eingestellten Anschlags dargestellt wird, wobei die die eingestellte haptische Rasterung und/oder der aktuell eingestellte Anschlag mit der dargestellten Information korrespondiert.

## Claims

1. A display and operating device comprising a display (5), an operating element (6) und a control device (7), wherein the operating element (6) is arranged behind the display (5), wherein a first section (8) of the operating element (6) is covered by the display (5) and a second, manually operable section (9) of the operating element (6) protrudes laterally beside the display (5), wherein the control device (7) is configured to control the display (5) for presenting at least one information at least partially on the partial area (10) of the display (5) covering the first section of the operating element (6), wherein the information is associated with at least one function adjustable via the operating element (6), **characterized in that**
a haptic rasterization and/or a stop of a movement of the operating element (6) are adjustable depending on the function to be adjusted, wherein the adjustability of the operating element is magnetorheologically implemented, and the intervals of the clicks, which form the rasterization, are preset by the control device and correspondingly generated by the operating element, wherein at least a part of the information can be presented depending on the currently adjusted rasterization and/or the currently adjusted stop, wherein the adjusted haptic rasterization and/or the currently adjusted stop correspond to the presented information.

2. The display and operating device according to claim 1,
**characterized in that**
the display (5) is formed to virtually extend the covered, first section (8) of the operating element (6) with the at least one information.

3. The display and operating device according to any one of the preceding claims,
**characterized in that**
at least one parameter of the function is adjustable by the operating element (6), wherein a currently adjusted value of the parameter and/or an adjustable range of values of the parameter can be presented at least as a part of the information, in particular as a scale.

4. The display and operating device according to any one of the preceding claims,
**characterized in that**
at least one graphic (15) corresponding to the contour of the first section (8) of the operating element (6) is displayed at least as a part of the information, wherein the graphic (15) can be presented in particular depending on a currently adjusted value of the or a parameter of the function and/or a current movement of the operating element (6).

5. The display and operating device according to any one of the preceding claims,
**characterized in that**
multiple functions are adjustable via the operating element (6), wherein at least a part of the information can be presented depending on the function currently to be adjusted via the operating element (6), and/or that at least a part of the information can be presented depending on a selection information describing a user selection relating to the function.

6. The display and operating device according to any one of the preceding claims,
**characterized in that**
the operating element (6) is disk-shaped and/or that the operating element (6) is rotatable and/or the operating element (6) is tiltable and/or the operating element (6) is shiftable and/or the operating element (6) is depressible as a button.

7. The display and operating device according to any one of the preceding claims,
**characterized in that**
the operating element (6) is formed for capturing pressing and/or pivoting the second section (9) and/or shifting the second section (9).

8. The display and operating device according to any one of the preceding claims,
**characterized in that**
the display (5) is designed as a touch display.

9. The display and operating device according to claim 8,
**characterized in that**
the function to be adjusted is selectable and/or at least partially adjustable via inputs on the touch display and/or that an adjustment of the function performed by the operating element (6) can be confirmed via the touch display.

10. A motor vehicle comprising at least one display and operating device according to any one of the preceding claims.

11. The motor vehicle according to claim 10,
**characterized in that**
the display and operating device is arranged at a door, at an armrest (3), at a center console, at a steering wheel and/or at a dashboard of the motor vehicle (1).

12. A method for the operation of a display and operating device (2) for information presentation, comprising a display (5), an operating element (6) and a control device (7), wherein the operating element (6) is arranged behind the display (5) and a first section (8) of the operating element (6) is covered by the display (5), wherein a second, manually operable section (9) of the operating element (6) protrudes laterally beside the display (5), wherein the display (5) is controlled by the control device (7) for presenting at least one information at least partially on the partial area (10) of the display (5) covering the first section (8) of the operating element (6), wherein the information is associated with at least one function adjustable via the operating element (6), **characterized in that**
a haptic rasterization and/or a stop of a movement of the operating element (6) are adjusted depending on the function to be adjusted, wherein the adjustability of the operating element is magnetorheologically implemented, and the intervals of the clicks, which form the rasterization, are preset by the control device and are correspondingly generated by the operating element, and wherein at least a part of the information is presented depending on the currently adjusted rasterization and/or the currently adjusted stop, wherein the adjusted haptic rasterization and/or the currently adjusted stop correspond to the presented information.

## Revendications

1. Dispositif d'affichage et de commande comprenant un affichage (5), un élément de commande (6) et un dispositif de commande (7), dans lequel l'élément de commande (6) est agencé derrière l'affichage (5), une première portion (8) de l'élément de commande (6) étant masquée par l'affichage (5) et une seconde portion (9) de l'élément de commande (6), pouvant être commandée manuellement, dépassant latéralement à côté de l'affichage (5), le dispositif de commande (7) étant configuré pour commander à l'affichage (5) d'afficher au moins une information au moins partiellement sur la zone partielle (10) de l'affichage (5) masquant la première portion de l'élément de commande (6), l'information étant associée à au moins une fonction réglable via l'élément de commande (6),
**caractérisé en ce qu'**
une grille haptique et/ou une butée d'un mouvement de l'élément de commande (6) peut être réglée en fonction de la fonction à régler, la capacité de réglage de l'élément de commande étant transformée de manière magnéto-rhéologique et les intervalles entre clics qui forment la grille sont prédéfinis par le dispositif de commande et générés en fonction de l'élément de commande, au moins une partie de l'information pouvant être représentée en fonction de la grille actuellement réglée et/ou de la butée actuellement réglée, la grille haptique réglée et/ou la butée actuellement réglée correspondant à l'information affichée.

2. Dispositif d'affichage et de commande selon la revendication 1,
**caractérisé en ce que**
l'affichage (5) est conçu pour étendre virtuellement la première portion masquée (8) de l'élément de commande (6) avec la au moins une information.

3. Dispositif d'affichage et de commande selon l'une des revendications précédentes,
**caractérisé en ce que**
au moins un paramètre de la fonction peut être réglé via l'élément de commande (6), une valeur actuellement réglée du paramètre et/ou une plage de valeurs réglables du paramètre pouvant être représentée, en particulier sous la forme d'une échelle, au moins comme une partie de l'information.

4. Dispositif d'affichage et de commande selon l'une des revendications précédentes,
**caractérisé en ce que**
au moins un graphique (15) correspondant au contour de la première portion (8) de l'élément de commande (6) est affiché comme une partie de l'information, le graphique (15) pouvant être représenté en particulier en fonction d'une valeur actuellement réglée du ou d'un paramètre de la fonction et/ou d'un mouvement actuel de l'élément de commande (6).

5. Dispositif d'affichage et de commande selon l'une des revendications précédentes,
**caractérisé en ce que**
plusieurs fonctions peuvent être réglées via l'élément de commande (6), au moins une partie de l'information pouvant être représentée en fonction de la fonction actuellement réglée via l'élément de commande (6), et/ou au moins une partie de l'information pouvant être représentée en fonction d'une information de sélection décrivant une sélection d'utilisateur concernant la fonction.

6. Dispositif d'affichage et de commande selon l'une des revendications précédentes,
**caractérisé en ce que**
l'élément de commande (6) est en forme de disque et/ou l'élément de commande (6) peut tourner et/ou l'élément de commande (6) peut être basculé et/ou l'élément de commande (6) peut être déplacé et/ou l'élément de commande (6) peut être enfoncé comme une touche.

7. Dispositif d'affichage et de commande selon l'une des revendications précédentes,
**caractérisé en ce que**
l'élément de commande (6) est conçu pour détecter une pression et/ou un pivotement de la seconde portion (9) et/ou un déplacement de la seconde portion (9).

8. Dispositif d'affichage et de commande selon l'une des revendications précédentes,
**caractérisé en ce que**
l'affichage (5) est réalisé sous la forme d'un écran tactile.

9. Dispositif d'affichage et de commande selon la revendication 8,
**caractérisé en ce que**
la fonction à régler peut être sélectionnée et/ou être au moins partiellement réglée via des entrées sur l'écran tactile et/ou un réglage de la fonction effectué via l'élément de commande (6) peut être confirmé via l'écran tactile.

10. Véhicule à moteur comprenant au moins un dispositif d'affichage et de commande selon l'une des revendications précédentes.

11. Véhicule à moteur selon la revendication 10,
**caractérisé en ce que**
le dispositif d'affichage et de commande est agencé sur une portière, sur un accoudoir (3), sur une console centrale, sur un volant et/ou sur un tableau de bord du véhicule à moteur (1).

12. Procédé pour faire fonctionner un dispositif d'affichage et de commande (2) pour l'affichage d'informations, comprenant un affichage (5), un élément de commande (6) et un dispositif de commande (7), dans lequel l'élément de commande (6) est agencé derrière l'affichage (5) et une première portion (8) de l'élément de commande (6) étant masquée par l'affichage (5), une seconde portion (9) de l'élément de commande (6), pouvant être commandée manuellement, dépassant latéralement à côté de l'affichage (5), l'affichage (5) étant commandé par le dispositif de commande (7) pour commander à l'affichage (5) d'afficher au moins une information au moins partiellement sur la zone partielle (10) de l'affichage (5) masquant la première portion (8) de l'élément de commande (6), l'information étant associée à au moins une fonction réglable via l'élément de commande (6),
**caractérisé en ce qu'**
une grille haptique et/ou une butée d'un mouvement de l'élément de commande (6) est réglée en fonction de la fonction à régler, la capacité de réglage de l'élément de commande étant transformée de manière magnéto-rhéologique et les intervalles entre clics qui forment la grille sont prédéfinis par le dispositif de commande et générés en fonction de l'élément de commande, et au moins une partie de l'information étant représentée en fonction de la grille actuellement réglée et/ou de la butée actuellement réglée, la grille haptique réglée et/ou la butée actuellement réglée correspondant à l'information affichée.
